# EUROPÄISCHE PATENTANMELDUNG

(11) **EP 3 822 016 A1**
(43) Veröffentlichungstag der Anmeldung: **19.05.2021**
(21) Anmeldenummer: 19209438.1
(22) Anmeldetag: 15.11.2019
(51) Int. Cl.: B23K 9/167, B23K 26/00, B23K 26/03, B23K 26/046, B23K 26/0622, B23K 26/32, B23K 26/40, B23K 31/12

(54) **VERFAHREN UND VORRICHTUNG ZUM ERMITTELN VON WERKSTÜCKEIGENSCHAFTEN UND ZUM EINSTELLEN VON LASERPARAMETERN BEI DER LASERBEARBEITUNG SOWIE ZUGEHÖRIGES COMPUTERPROGRAMMPRODUKT**

(71) Anmelder: TRUMPF Schweiz AG, 7214 Grüsch (CH)
(72) Erfinder: ALBERS, Klaus, 7000 Chur (CH); HERZOG, Teja, 7302 Landquart (CH)
(74) Vertreter: Kohler Schmid Möbus Patentanwälte

(57) **Zusammenfassung**

Das erfindungsgemäße Verfahren zum Ermitteln von Werkstückeigenschaften und/oder zum Einstellen von Laserparametern bei der Laserbearbeitung eines Werkstücks (4) mittels eines Laserstrahls (3) umfasst folgende Verfahrensschritte: Messen der Lichtemission (8) eines bei der Laserbearbeitung des Werkstücks (4) erzeugten Plasmas (9) bei unterschiedlichen Werten mindestens eines Laserparameters der Laserbearbeitung;
Bestimmen des Schwellwertes für den mindestens einen Laserparameter, ab dem das Plasma (9) erzeugt wird,
Ermitteln von Werkstückeigenschaften durch Vergleichen des bestimmten Schwellwertes mit gespeicherten Referenz-Schwellwerten, die bei der Laserbearbeitung eines Werkstücks mit bekannten Werkstückeigenschaften bestimmt worden sind, und/oder
Einstellen des mindestens einen Laserparameters für die weitere Laserbearbeitung des Werkstücks (4) auf einen Wert anhand des bestimmten Schwellwertes.

## Beschreibung

Die Erfindung betrifft ein Verfahren und eine Vorrichtung zum Ermitteln von Werkstückeigenschaften und/oder zum Einstellen von Laserparametern bei der Laserbearbeitung eines Werkstücks, sowie ein zugehöriges Computerprogrammprodukt.

Bei der Lasermarkierung entsteht bei hinreichend hohen Intensitäten/Fluenzen ein Plasma, welches Licht im sichtbaren bzw. ultravioletten Spektralbereich emittiert. Es ist bekannt, das Plasmalicht zu messen, um die Materialzusammensetzung des Werkstücks zu analysieren (z.B. WO 2013/083950 A1) oder um anhand der Intensität, der spektralen Zusammensetzung und deren zeitlicher Änderung Information über die Laserbearbeitung zu gewinnen (z.B. US 2014/0021177 A1).

Weiterhin ist es - z.B. beim Lasermarkieren - bekannt, dass Testfelder des Werkstücks mit unterschiedlichen Werten eines Laserparameters bearbeitet und anschließend die bearbeiteten Testfelder von einer Person visuell, also subjektiv, beurteilt werden, um für die eigentliche Laserbearbeitung den optimalen Wert des Laserparameters zu ermitteln.

Demgegenüber ist es die Aufgabe der vorliegenden Erfindung, ein Verfahren und eine Vorrichtung anzugeben, um automatisiert sowohl Eigenschaften des zu bearbeitenden Werkstücks als auch einen für die eigentliche Laserbearbeitung geeigneten Wert bzw. den optimalen Wert eines Laserparameters zu ermitteln. Insbesondere soll auch eine in-situ Prozesskontrolle der Laserbearbeitung bereitgestellt werden.

Diese Aufgabe wird erfindungsgemäß gelöst durch ein Verfahren zum Ermitteln von Werkstückeigenschaften und/oder zum Einstellen von Laserparametern bei der Laserbearbeitung eines Werkstücks, mit folgenden Verfahrensschritten: Messen der Lichtemission eines bei der Laserbearbeitung des Werkstücks erzeugten Plasmas bei unterschiedlichen Werten mindestens eines Laserparameters;

Bestimmen des Schwellwertes für den mindestens einen Laserparameter, ab dem das Plasma erzeugt wird,

Ermitteln von Werkstückeigenschaften durch Vergleichen des bestimmten Schwellwertes mit gespeicherten Referenz-Schwellwerten, die bei der Laserbearbeitung eines Werkstücks mit bekannten Werkstückeigenschaften bestimmt worden sind, und/oder

Einstellen des mindestens einen Laserparameters für die weitere Laserbearbeitung des Werkstücks auf einen Wert anhand des bestimmten Schwellwertes. Vorzugsweise wird die Lichtemission des Plasmas im sichtbaren und/oder ultravioletten Spektralbereich gemessen.

Erfindungsgemäß wurde gefunden, dass sich die Plasmaerzeugung bei verschiedenen Werkstückmaterialien stark unterschiedlich verhält, z.B. bezüglich des erforderlichen Plasmaschwellwertes für die Intensität oder Fluenz. Durch Bestimmen der Schwellwertes am aktuellen Werkstück kann durch Vergleich mit Referenz-Schwellwerten bekannter Werkstückmaterialien das aktuelle Werkstückmaterial zumindest grob (Kunststoff, Metall, ...) bestimmt werden.

Bei Werkstoffen (z.B. Metallen), bei denen oberhalb der Plasmaschwelle gearbeitet werden muss, wird der Laserparameter auf einen Wert eingestellt, bei dem das Plasma erzeugt wird.

Bei Werkstoffen (z.B. Kunststoff), bei denen unterhalb der Plasmaschwelle geblieben werden muss, wird der Laserparameter hingegen auf einen Wert eingestellt, bei dem noch kein Plasma erzeugt wird. Bei solchen Werkstoffen bietet es sich an, die Plasmaschwelle in einem ersten Schritt zu finden und dann aus Erfahrungswerten festzulegen, welcher Laserparameter von der Laserbearbeitungsmaschine wie stark verändert werden muss, um hinreichend weit genug unterhalb der Plasmaschwelle eine qualitativ hochwertige Markierung zu erzeugen. Bevorzugt wird dabei eine vorbestimmte minimale Differenz des eingestellten Werts von dem Schwellwert eingehalten.

Durch Kombination mit einer spektralen Vermessung der Lichtemission des Plasmas und ggf. mit mehreren gemessenen Schwellwerten für unterschiedliche Laserparameter kann die Materialeinordnung weiter verbessert werden.

Besonders bevorzugt ist der mindestens eine Laserparameter die Pulsenergie eines gepulsten Laserstrahls oder der Pulsüberlapp eines gepulsten Laserstrahls. Die Lichtemission wird bei unterschiedlichen Pulsenergiewerten des gepulsten Laserstrahls gemessen und daraus der zugehörige Schwellwert für die Pulsenergie bestimmt. Auch das Kumulieren von Energie durch Pulsüberlapp hat einen relevanten Einfluss auf die Plasma-Emission.

Insbesondere beim Lasergravieren wird vorteilhaft zu Beginn der weiteren Laserbearbeitung des Werkstücks die Fokuslage des Laserstrahls auf maximale Lichtemission des Plasmas eingestellt und während der weiteren Laserbearbeitung dann die Lichtemission des Plasmas durch Nachregeln eines Laserparameters, wie z.B. der Fokuslage des Laserstrahls, unverändert oder nahezu unverändert gehalten.

Vorzugsweise wird die weitere Laserbearbeitung des Werkstücks durch fortlaufende Messung der Lichtemission des Plasmas überwacht und im Fehlerfall beendet.

Da die Leuchtdauer des Plasmas länger als die Pulsdauer des Laserpulses ist, kann zwischen zwei Laserpulsen zusätzlich der zeitliche Verlauf der Lichtemission des Plasmas aufgenommen und ausgewertet werden.

Besonders bevorzugt wird während der weiteren Laserbearbeitung des Werkstücks die Differenz des eingestellten Werts von dem Schwellwert zummindest in einem bestimmten Zeitintervall konstant gehalten.

Die Erfindung betrifft auch eine zum Durchführen des erfindungsgemäßen Verfahrens geeignete Laserbearbeitungsmaschine mit einem Laserstrahlerzeuger zum Erzeugen eines Laserstrahls zur Bearbeitung eines Werkstücks, mit einer Maschinensteuerung zum Einstellen von Laserparametern der Laserbearbeitung, mit einem Plasmalichtsensor zum Messen der Lichtemission eines bei der Laserbearbeitung des Werkstücks erzeugten Plasmas und mit einer Auswerteeinheit, die den Schwellwert für mindestens einen Laserparameter der Laserbearbeitung bestimmt, ab dem das Plasma erzeugt wird, und die durch Vergleich des bestimmten Schwellwertes mit gespeicherten Referenz-Schwellwerten, welche bei der Laserbearbeitung eines Werkstücks mit bekannten Werkstückeigenschaften bestimmt worden sind, Werkstückeigenschaften des Werkstücks ermittelt und/oder den mindestens einen Laserparameter für die weitere Laserbearbeitung des Werkstücks anhand des bestimmten Schwellwertes auf einen Wert, bei dem das Plasma erzeugt wird, einstellt.

Vorzugsweise sind die Referenz-Schwellwerte in einem Datenspeicher gespeichert, auf den die Auswerteeinheit Zugriff hat.

Die Erfindung betrifft schließlich auch ein Computerprogrammprodukt, welches Codemittel aufweist, die zum Durchführen aller Schritte des erfindungsgemäßen Verfahrens angepasst sind, wenn das Programm auf einer Maschinensteuerung einer Laserbearbeitungsmaschine abläuft.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigen:
- Fig. 1: schematisch eine erfindungsgemäße Laserbearbeitungsmaschine mit einem Plasmalichtsensor zum Messen von bei der Laserbear-beitung erzeugtem Plasmalicht;
- Fig. 2: schematisch die Abhängigkeit der Plasmalichtintensität von der Pulsenergie eines gepulsten Laserstrahls, für zwei unterschiedli-che Materialien; und
- Fign. 3A, 3B: schematisch das Plasmalichtspektrum für zwei unterschiedliche Materialien.

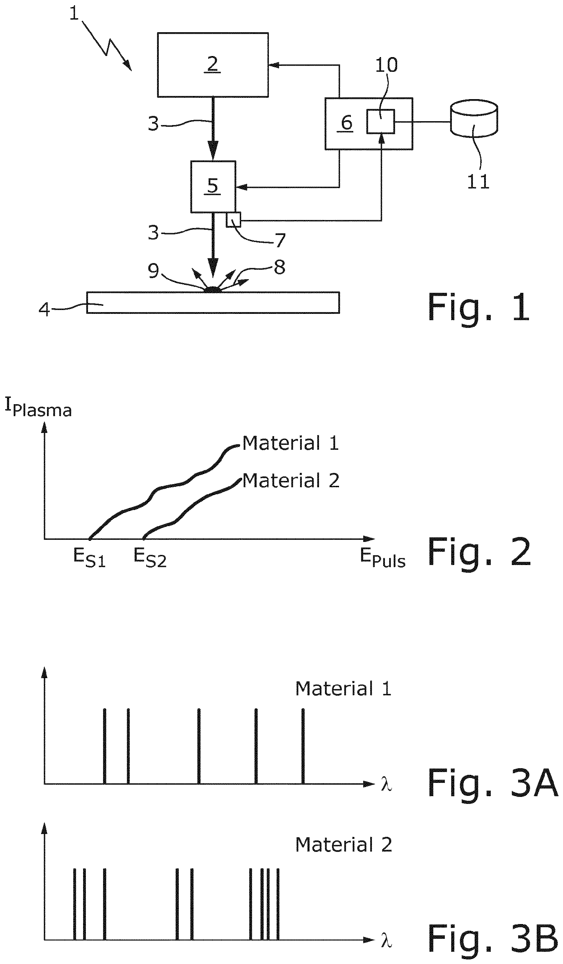

Die in **Fig. 1** gezeigte Laserbearbeitungsmaschine **1** umfasst einen Laserstrahlerzeuger **2,** der einen insbesondere gepulsten Laserstrahl **3** zum Bearbeiten eines Werkstücks **4** erzeugt, einen Bearbeitungskopf **5,** der den Laserstrahl 3 auf das Werkstück 4 richtet, eine Maschinensteuerung **6,** welche Laserparameter für die Laserbearbeitung am Laserstrahlerzeuger 2 und am Bearbeitungskopf 5 einstellt, einen Plasmalichtsensor **7** zum Messen der Lichtemission (Plasmalicht) **8** eines bei der Laserbearbeitung des Werkstücks 4 erzeugten Plasmas **9** sowie eine Auswerteeinheit **10**, welche das gemessene Plasmalicht 8 auswertet. Die Auswerteeinheit 10 oder die Maschinensteuerung 6 haben Zugriff auf einen Datenspeicher **11.**

Wie in Fig. 1 gezeigt, ist der Plasmalichtsensor 7 am Bearbeitungskopf 5 angeordnet und die Auswertungseinrichtung 10 in die Maschinensteuerung 6 integriert. Alternativ kann der Plasmalichtsensor 7 aber auch unabhängig vom Bearbeitungskopf 5 angeordnet und die Auswertungseinrichtung 10 eine der Maschinensteuerung 6 vorgeschaltete, separate Einheit sein.

Bei der Lasermarkierung entsteht bei hinreichend hohen Intensitäten/Fluenzen des Laserstrahls 3 am Bearbeitungsort ein Plasma 9, welches Plasmalicht 8 im sichtbaren bzw. ultravioletten Spektralbereich emittiert. Dieses Plasmalicht 8 wird mit dem Plasmalichtsensor (z.B. Photodiode) 7 gemessen, dem optional ein optischer Filter (nicht gezeigt) vorgeordnet sein kann, um das Laserlicht auszublenden.

Es wurde gefunden, dass sich die Plasmaerzeugung bei verschiedenen Werkstückmaterialen stark unterschiedlich verhält, z.B. bezüglich der erforderlichen Plasmaschwelle für Intensität oder Fluenz. Das Plasmalicht 8 kann daher genutzt werden, um sowohl Werkstückeigenschaften des zu bearbeitenden Werkstücks 4, wie z.B. das Werkstückmaterial, als auch einen für die eigentliche Laserbearbeitung geeigneten Wert bzw. den optimalen Wert eines Laserparameters zu ermitteln.

Zum automatisierten Ermitteln des Werkstückmaterials wird wie folgt vorgegangen:
Das Plasmalicht 8 wird bei unterschiedlichen Werten eines Laserparameters der Laserbearbeitung gemessen, z.B. bei unterschiedlichen Pulsenergien E_{Puls} des gepulsten Laserstrahls 3. Aus den Messwerten bestimmt die Auswerteeinheit 10 für diesen Laserparameter den Schwellwert (Plasmaschwelle), ab dem das Plasma 9 erzeugt wird, und ermittelt das vorliegende Werkstückmaterial durch Vergleich des bestimmten Schwellwerts mit Referenz-Schwellwerten, die bei der Laserbearbeitung eines Werkstücks mit bekanntem Werkstückmaterial zuvor bestimmt und im Datenspeicher 11 gespeichert worden sind. Auf diese Weise kann zumindest eine grobe Materialeinordnung (Kunststoff, Metall, ...) vorgenommen werden.

**Fig. 2** zeigt für zwei unterschiedliche Materialien schematisch die Abhängigkeit der Plasmalichtintensität I_{Plasma} von der Pulsenergie E_{Puls} des gepulsten Laserstrahls 3. Der Referenz-Schwellwert E_{S1} der Pulsenergie, ab dem für das Material 1 das Plasma 9 erzeugt wird, ist geringer als der Referenz-Schwellwert E_{S2} der Pulsenergie, ab dem für das Material 2 das Plasma 9 erzeugt wird. Diese Referenz-Schwellwerte E_{S1}, E_{S2} für die beiden Werkstückmaterialien sind im Datenspeicher 11 gespeichert.

Anhand der Messwerte des Plasmalichtsensors 7 kann die Auswerteeinheit 10 das Plasmalicht 8 zusätzlich auch spektral vermessen, also die einzelnen Spektrallinien des Plasmalichts 8 bestimmen. Die Auswerteeinheit 10 ermittelt dann durch Vergleich mit Referenz-Spektrallinien, die bei der Laserbearbeitung eines Werkstücks mit bekanntem Werkstückmaterial zuvor bestimmt und im Datenspeicher 11 gespeichert worden sind, das vorliegende Werkstückmaterial.

In **Fign. 3A, 3B** sind schematisch die unterschiedlichen Plasmalichtspektren für die beiden unterschiedlichen Materialien gezeigt, die im Datenspeicher 11 als Referenz-Spektren für die beiden Werkstückmaterialien gespeichert sind.

Durch Kombination mit der spektralen Vermessung des Plasmalichts 8 und ggf. mit mehreren gemessenen Schwellwerten für unterschiedliche Laserparameter kann die Materialeinordnung weiter verbessert werden.

Zum automatisierten Einstellen von Laserparametern bei der Laserbearbeitung des Werkstücks 4 wird wie folgt vorgegangen:
Das Plasmalicht 8 wird bei unterschiedlichen Werten eines Laserparameters der Laserbearbeitung gemessen, z.B. bei unterschiedlichen Pulsenergien E_{Puls} des gepulsten Laserstrahls 3. Aus den Messwerten bestimmt die Auswerteeinheit 10 für diesen Laserparameter den Schwellwert (Plasmaschwelle), ab dem das Plasma 9 erzeugt wird. Anhand des so bestimmten Schwellwertes stellt die Maschinensteuerung 6 dann den Laserparameter für die weitere Laserbearbeitung des Werkstücks 4 auf einen Wert ein, bei dem das Plasma 9 sicher erzeugt wird. Im Beispielfall der Pulsenergie also auf eine Pulsenergie E_{Puls} höher als der bestimmte Pulsenergie-Schwellwert.

Außerdem kann der Plasmalichtsensor 7 auch zur in-situ Prozessüberwachung eingesetzt werden, indem die Laserbearbeitung des Werkstücks 4 durch fortlaufende Messung des Plasmalichts 8 überwacht und im Fehlerfall beendet wird. Während der Laserbearbeitung des Werkstücks 4 kann das Plasmalicht 8 gemessen und durch Regelung eines Laserparameters unverändert oder nahezu unverändert gehalten werden, um den Bearbeitungsprozess stabil zu halten..

Bei der Tiefengravur kann zum Beispiel die Fokuslage des Laserstrahls 3 automatisch entsprechend der zunehmenden Gravurtiefe nachgeführt werden, indem die Fokuslage stets auf maximale Lichtplasmaintensität oder auf die Lichtplasmaintensität wie zu Bearbeitungsbeginn geregelt wird.

Da die Leuchtdauer des Plasmalichts 8 länger als die Pulsdauer des Laserpulses ist, kann zwischen zwei Laserpulsen zusätzlich der zeitliche Verlauf des Plasmalichts 8 aufgenommen und von der Auswerteeinheit 10 ausgewertet werden.

## Patentansprüche

1. Verfahren zum Ermitteln von Werkstückeigenschaften und/oder zum Einstellen von Laserparametern bei der Laserbearbeitung eines Werkstücks (4) mittels eines Laserstrahls (3), mit folgenden Verfahrensschritten:
Messen der Lichtemission (8) eines bei der Laserbearbeitung des Werkstücks (4) erzeugten Plasmas (9) bei unterschiedlichen Werten mindestens eines Laserparameters der Laserbearbeitung;
Bestimmen des Schwellwertes für den mindestens einen Laserparameter, ab dem das Plasma (9) erzeugt wird,
Ermitteln von Werkstückeigenschaften durch Vergleichen des bestimmten Schwellwertes mit gespeicherten Referenz-Schwellwerten, die bei der Laserbearbeitung eines Werkstücks mit bekannten Werkstückeigenschaften bestimmt worden sind, und/oder
Einstellen des mindestens einen Laserparameters für die weitere Laserbearbeitung des Werkstücks (4) auf einen Wert anhand des bestimmten Schwellwertes.

2. Verfahren nach Anspruch 1, **dadurch gekennzeichnet, dass** der Laserparameter auf einen Wert eingestellt wird, bei dem das Plasma (9) erzeugt wird, oder dass der Laserparameter auf einen Wert eingestellt wird, bei dem noch kein Plasma (9) erzeugt wird, wobei insbesondere eine vorbestimmte minimale Differenz des eingestellten Werts von dem Schwellwert eingehalten wird.

3. Verfahren nach Anspruch 1 oder 2, **dadurch gekennzeichnet, dass** die Lichtemission (8) des Plasmas (9) im sichtbaren und/oder ultravioletten Spektralbereich gemessen wird.

4. Verfahren nach einem der vorhergehenden Ansprüche, **dadurch gekennzeichnet, dass** beim Messen der Lichtemission (8) des Plasmas (9) die einzelnen Spektrallinien der Lichtemission (8) aufgenommen werden.

5. Verfahren nach einem der vorhergehenden Ansprüche, **dadurch gekennzeichnet, dass** der mindestens eine Laserparameter die Fluenz oder die Intensität des Laserstrahls (3) ist.

6. Verfahren nach einem der vorhergehenden Ansprüche, **dadurch gekennzeichnet, dass** der mindestens eine Laserparameter die Pulsenergie (E_{Puls}) eines gepulsten Laserstrahls (3) oder der Pulsüberlapp eines gepulsten Laserstrahls (3) ist.

7. Verfahren nach einem der vorhergehenden Ansprüche, **dadurch gekennzeichnet, dass** zu Beginn der weiteren Laserbearbeitung des Werkstücks (4) die Fokuslage des Laserstrahls (3) auf maximale Lichtemission (8) des Plasmas (9) eingestellt wird.

8. Verfahren nach einem der vorhergehenden Ansprüche, **dadurch gekennzeichnet, dass** während der weiteren Laserbearbeitung des Werkstücks (4) die Lichtemission (8) des Plasmas (9) gemessen und durch Regelung mindestens eines Laserparameters unverändert oder nahezu unverändert gehalten wird.

9. Verfahren nach Anspruch8, **dadurch gekennzeichnet, dass** der geregelte Laserparameter die Fokuslage des Laserstrahls (3) ist.

10. Verfahren nach einem der vorhergehenden Ansprüche, **dadurch gekennzeichnet, dass** die weitere Laserbearbeitung des Werkstücks (4) durch fortlaufende Messung der Lichtemission (8) des Plasmas (9) überwacht wird.

11. Verfahren nach einem der vorhergehenden Ansprüche, **dadurch gekennzeichnet, dass** der zeitliche Verlauf der Lichtemission des Plasmas (9) zwischen zwei Laserpulsen eines gepulsten Laserstrahls (3) aufgenommen und ausgewertet wird.

12. Verfahren nach einem der vorhergehenden Ansprüche, **dadurch gekennzeichnet, dass** während der weiteren Laserbearbeitung des Werkstücks (4) die Differenz des eingestellten Werts von dem Schwellwert in einem bestimmten Zeitintervall konstant gehalten wird.

13. Laserbearbeitungsmaschine (1) mit einem Laserstrahlerzeuger (2) zum Erzeugen eines Laserstrahls (3) zur Bearbeitung eines Werkstücks (4), mit einer Maschinensteuerung (6) zum Einstellen von Laserparametern der Laserbearbeitung, mit einem Plasmalichtsensor (7) zum Messen der Lichtemission (8) eines bei der Laserbearbeitung des Werkstücks (4) erzeugten Plasmas (9) und mit einer Auswerteeinheit (10), die den Schwellwert für mindestens einen Laserparameter der Laserbearbeitung bestimmt, ab dem das Plasma (9) erzeugt wird, und die durch Vergleich des bestimmten Schwellwertes mit gespeicherten Referenz-Schwellwerten, welche bei der Laserbearbeitung eines Werkstücks (4) mit bekannten Werkstückeigenschaften bestimmt worden sind, Werkstückeigenschaften des Werkstücks (4) ermittelt und/oder den mindestens einen Laserparameter für die weitere Laserbearbeitung des Werkstücks (4) anhand des bestimmten Schwellwertes einstellt.

14. Laserbearbeitungsmaschine nach Anspruch 13, **gekennzeichnet durch** einen Datenspeicher (11), in dem die Referenz-Schwellwerte gespeichert sind.

15. Computerprogrammprodukt, welches Codemittel aufweist, die zum Durchführen aller Schritte des Verfahrens nach einem der Ansprüche 1 bis 12 angepasst sind, wenn das Programm auf einer Maschinensteuerung (6) einer Laserbearbeitungsmaschine (1) abläuft.
